# EUROPÄISCHE PATENTSCHRIFT

(11) **EP 2 790 298 B1**
(45) Veröffentlichungstag und Bekanntmachung des Hinweises auf die Patenterteilung: **28.08.2019**
(21) Anmeldenummer: 13163200.2
(22) Anmeldetag: 10.04.2013
(51) Int. Cl.: H02K 3/50, H02K 5/22

(54) **Stator eines Elektromotors**
Stator of an electric motor
Stator d'un moteur électrique

(43) Veröffentlichungstag der Anmeldung: 15.10.2014
(73) Patentinhaber: Grundfos Holding A/S, 8850 Bjerringbro (DK)
(72) Erfinder: Stampe, Lars Toft, 8800 Viborg (DK)
(74) Vertreter: Patentanwälte Vollmann Hemmer Lindfeld Partnerschaft mbB

(56) Entgegenhaltungen:
- EP-A1- 0 632 564
- EP-A1- 1 191 665
- EP-A1- 1 322 021
- DE-A1- 10 327 960
- GB-A- 2 310 766
- US-A1- 2010 084 931

## Beschreibung

Die Erfindung betrifft einen Stator eines Elektromotors sowie ein Verfahren zum Einführen eines Wicklungsdrahtes einer Statorwicklung eines Stators in ein an dem Stator angeordnetes Kontaktelement.

Statoren von Elektromotoren, wie sie insbesondere in Pumpenaggregaten, wie Heizungsumwälzpumpenaggregaten eingesetzt werden, weisen üblicherweise einen Eisenteil auf, auf welchen Wicklungsträger aus Kunststoff aufgesetzt sind, um die wiederum mehrere Statorwicklungen gewickelt sind. Dabei ist es bekannt, die Wicklungen direkt im Stator zu wickeln. Auf eines der Axialenden ist dann üblicherweise eine Wicklungsschutzkappe aus Kunststoff aufgesetzt, an welcher elektrische Anschlusselemente bzw. Kontaktelemente zum Anschluss der Wicklungsdrähte vorgesehen sind. Die einzelnen Wicklungsdrähte sind dann zu diesen Kontaktelementen geführt und mit diesen verbunden. Dabei treten die Wicklungsdrähte an verschiedenen Umfangspositionen, nämlich dort wo die einzelnen Spulen gelegen sind, aus dem Stator heraus. Die Führung und Verbindung der Wicklungsdrähte mit den Kontaktelementen erfordert dabei üblicherweise eine drückende und ziehende Manipulation, welche nur sehr schwer automatisierbar ist und daher häufig von Hand ausgeführt werden muss.

EP 1 191 665 A1 offenbart einen Stator für einen Elektromotor, welcher in der Weise ausgebildet ist, dass in ein Statorblechpaket fertig gewickelte Spulen eingezogen werden und anschließend die Anschlussdrähte der Spulen über Vorsprünge am Stator in ein am Außenumfang des Stators gelegenes Anschlusselement geführt werden. Eine ähnliche Anordnung ist aus EP 0 632 564 A1 bekannt.

GB 2 310 766 A sowie DE 103 27 960 A1 zeigen ebenfalls Statoranordnungen für Elektromotoren, bei welchen an der Stirnseite des Stators Führungen bzw. Nuten ausgebildet sind, durch welche Anschlussdrähte für die Statorspulen geführt sind. Dabei ist in DE 103 27 960 A1 ein Anschlussstecker nicht gezeigt. In GB 2 310 766 A ist ein am Außenumfang angeordneter Statorstecker gezeigt.
Die Anordnung des Steckers am Außenumfang hat den Nachteil, dass ein so ausgebildeter Stator sich nicht in ein Motorgehäuse einschieben lässt bzw. das in dem Motorgehäuse entsprechende Aussparungen für den Stecker vorgesehen sein müssen.

Im Hinblick auf diese Problematik ist es Aufgabe der Erfindung, einen Stator eines Elektromotors dahingehend zu verbessern, dass der Wicklungsdraht auf einfache Weise automatisiert mit einem Kontaktelement verbunden werden kann und es gleichzeitig problemlos möglich ist, den Stator in ein umgebendes Motorgehäuse einzuschieben.

Diese Aufgabe wird durch einen Stator mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Der erfindungsgemäße Stator eines Elektromotors ist insbesondere zur Anordnung in einem Motor- oder Statorgehäuse, beispielsweise eines Pumpenaggregates vorgesehen. Der Stator weist einen Statorkörper auf, in dem zumindest eine Statorwicklung angeordnet ist. Vorzugsweise sind mehrere Statorwicklungen, insbesondere beispielsweise sechs Statorwicklungen angeordnet, wobei von diesen jeweils zwei gegenüberliegende Wicklungen zu einem Wicklungspaar elektrisch miteinander verbunden sein können. Die Wicklungen sind bevorzugt direkt in dem Statorkörper gewickelt. Der Statorkörper kann dabei in bekannter Weise einen Eisenteil, insbesondere ein Blechpaket aufweisen. Dieses kann ringförmig ausgebildet sein und radial nach innen gerichtete Zähne aufweisen, um weiche die Wicklungen gewickelt sind. Im Inneren verbleibt ein kreisförmiger Freiraum zur Aufnahme eines Rotors, wobei gegebenenfalls zwischen Rotor und Stator ein Spaltrohr angeordnet werden kann. Vor dem Aufbringen der Wicklungen kann auf das Eisenteil ein Wicklungsträger aus Kunststoff aufgebracht sein. So können Kunststoffelemente auf die Zähne aufgesetzt sein, um welche dann die Wicklungen gewickelt sind. Die einzelnen Wicklungen müssen zum Anschluss des Stators elektrisch miteinander kontaktiert und gegebenenfalls miteinander verschaltet werden, beispielsweise in Sternschaltung. Aus diesem Grunde ist an einem ersten axialen Ende des Statorkörpers zumindest ein elektrisches Kontaktelement angeordnet, mit welchem ein Wicklungsdraht der zumindest einen Statorwicklung verbunden ist. Vorzugsweise ist bei mehreren Statorwicklungen für jede Statorwicklung zumindest ein Kontaktelement vorgesehen, sodass somit zumindest ein Drahtende jeder Wicklung mit einem Kontaktelement verbunden werden kann.

Durch spezielle Führung des Wicklungsdrahtes ist es erfindungsgemäß möglich, diesen auf vereinfachte Weise von seinem Austritt aus dem Statorkörper zu dem Kontaktelement zu führen und mit diesem zu kontaktieren, sodass insbesondere eine Automatisierung dieses Montagevorgangs mithilfe eines Roboters möglich ist. Erfindungsgemäß ist der Wicklungsdraht ausgehend von seinem Austritt aus dem Statorkörper um zumindest ein Umlenkelement geführt. Das Umlenkelement dient dazu, die Erstreckungsrichtung des Wicklungsdrahtes zu ändern, d. h. den Wicklungsdraht, welcher sich bevorzugt gerade erstreckt, in einem Winkel umzulenken. Das zumindest eine Umlenkelement ist dabei derart angeordnet, dass der Wicklungsdraht sich ausgehend von seinem Austritt aus dem Statorkörper um das zumindest eine Umlenkelement erstreckt und dass sich der Wicklungsdraht zu dem Kontaktelement hin ausgehend von einer Position erstreckt, welche in Richtung parallel zum Radius weiter innen gelegen ist als eine innere Seite bzw. Rückseite des Kontaktelementes. Anschließend ist der Wicklungsdraht mit dem Kontaktelement von dessen radial äußerer Seite bzw. Vorderseite her verbunden. Das Kontaktelement weist somit einen zum Außenumfang des Stators gewandte Vorderseite und eine diese um 180° abgewandte Rückseite auf. Das zumindest eine Umlenkelement ist erfindungsgemäß relativ zu dem elektrischen Kontaktelement und dem Austritt so angeordnet, dass es einen gestreckten Verlauf des Wicklungsdrahtes zwischen dem Umlenkelement und zumindest einem weiteren Umlenkpunkt und/oder dem elektrischen Kontaktelement ermöglicht. Die Anordnung ermöglicht so insbesondere beim Anbringen des Wicklungsdrahtes diesen gestreckt zwischen dem Umlenkelement und dem Kontaktelement oder zwischen dem Umlenkelement und einem weiteren Umlenkpunkt zu führen. Zwischen dem Umlenkelement und zumindest einem weiteren Umlenkelement und/oder dem elektrischen Kontaktelement verläuft der Wicklungsdraht somit bevorzugt gerade bzw. gestreckt. Dabei ist zu verstehen, dass der Draht gegebenenfalls gestreckt angebracht bzw. um das Umlenkelement geführt werden kann, anschließend jedoch beispielsweise aufgrund elastischer Rückstellkräfte eine Lage einnimmt, welche von der gestreckten geraden Anordnung abweicht. Die erfindungsgemäße Anordnung des Umlenkelementes ermöglicht somit beim Anbringen des Wicklungsdrahtes eine gestreckte Führung, wobei der gestreckte Verlauf anschließend nicht zwingend dauerhaft beibehalten werden muss. Diese Montage bzw. Führung des gestreckten Wicklungsdrahtes hat den Vorteil, dass keine drückende Manipulation erforderlich ist, sodass der Wicklungsdraht vorzugsweise einhändig durch Ergreifen an einem einzigen Punkt manipuliert und von dem Austritt zu dem Kontaktelement geführt werden kann. Dies begünstigt eine Automatisierung dieses Vorganges.

Das Kontaktelement ist vorzugsweise in der Nähe des Außenumfanges an der axialen Seite bzw. axialen Stirnseite des Stators angeordnet. Dabei erstreckt es sich jedoch vorzugsweise nicht über den Außenumfang des Stotorkörpers hinaus, sodass es ein Einschieben in ein Motor- bzw. Statorgehäuse nicht verhindert. Die Erstreckung des Wicklungsdrahtes von der ersten Position zu dem Kontaktelement muss dabei nicht genau in radialer Richtung erfolgen sondern kann parallel versetzt zu dem Radius erfolgen, je nachdem wo das Kontaktelement gelegen ist. Erfindungswesentlich ist jedoch, dass der Wicklungsdraht von der Rückseite her an das Kontaktelement heran geführt und dann um dieses herum geführt wird, um mit dem Kontaktelement an einer Vorderseite verbunden zu werden. Dies ermöglicht es, den Wicklungsdraht allein durch Ziehen durch das Kontaktelement herumzuführen und kontaktierend mit dessen Vorderseite in kontaktierenden Eingriff zu bringen. D. h. der Wicklungsdraht erstreckt sich aus einer Richtung zu dem Kontaktelement, welche der Richtung, mit welcher der Wicklungsdraht mit dem Kontaktelement in Kontakt gebracht wird, im Wesentlichen entgegengesetzt ist. So kann der Wicklungsdraht in der ersten Richtung zunächst zu dem Kontaktelement hingezogen werden und dann um das Kontaktelement oder ein weiteres direkt an dem Kontaktelement angeordnetes Umlenkelement im Wesentlichen um 180° umgelenkt und dann in entgegengesetzter Richtung zu dem Kontaktelement hin zu dessen Kontaktierung gezogen werden. Es ist somit keine drückende Bewegung zum Inkontaktbringen des Wicklungsdrahtes mit dem Kontaktelement erforderlich, sodass die Manipulation vereinfacht wird.

Dadurch, dass der Wicklungsdraht gerade bzw. gestreckt geführt wird, ist es möglich, den Wicklungsdraht unter Spannung als geraden Draht um die Umlenkelemente zu dem Kontaktelement zu führen. So wird eine drückende Manipulation überflüssig und der Wicklungsdraht kann sehr einfach durch Ergreifen an nur einer einzigen Position von seinem Austritt zu Kontaktelement bewegt bzw. geführt werden.

Das Kontaktelement kann ein metallisches Kontaktelement sein oder eine tragende Struktur aus Kunststoff aufweisen, in welche metallische Elemente zur Kontaktierung der Wicklungsdrähte eingebracht sind.

Bevorzugt weist das Kontaktelement einen Aufnahmeraum auf, in welchen der Wicklungsdraht der Statorwicklung geführt ist, wobei der Aufnahmeraum eine radial nach außen bzw. in einer Richtung parallel zum Radius nach außen gerichtete Öffnung und einen gegenüber der Öffnung parallel zum Radius des Statorkörpers weiter innen liegenden Boden aufweist, wobei der Wicklungsdraht ausgehend von seinem Austritt aus dem Statorkörper derart um zumindest ein Umlenkelement geführt ist, dass er sich von einer Position, welche in Richtung parallel zum Radius weiter innen als der Boden liegt, zu der Öffnung des elektrischen Kontaktelementes erstreckt. D. h. auch hier erstreckt sich der Wicklungsdraht von der Rückseite her, d. h. von einer von der Öffnung her gesehen hinter dem Boden gelegenen Position an dem Kontaktelement vorbei zu dessen Vorderseite und von dort aus in die an der Vorderseite gelegene Öffnung. Insofern wird der Wicklungsdraht an dem Kontaktelement vorbei und um dieses herum zu einer dem Ausgangspunkt des Drahtes abgewandten Seite geführt und dort in Öffnung eingeführt. Der Aufnahmeraum kann bevorzugt durch Wände aus Kunststoff begrenzt sein, in welche metallische Elemente zur Kontaktierung des Wicklungsdrahtes eingebracht sind. Bevorzugt wird zunächst der Wicklungsdraht in den Aufnahmeraum eingebracht und anschließend werden metallische Elemente zur Kontaktierung eingesetzt bzw. eingepresst, welche so den Wicklungsdraht kontaktieren und gleichzeitig in dem Aufnahmeraum fixieren. Die metallischen Elemente sind dabei vorzugsweise als Schneidkontakte ausgebildet, welche eine Isolierung, insbesondere eine Lackschicht, welche den Wicklungsdraht umgibt, durchschneiden.

Besonders bevorzugt sind für zumindest einen Wicklungsdraht das Kontaktelement, mit welchem der Wicklungsdraht verbunden ist, und zumindest ein Umlenkelement derart angeordnet, dass zum Einführen des Wicklungsdrahtes in das Kontaktelement dieser von seinem Austritt aus dem Statorkörper um das zumindest eine Umlenkelement und in das Kontaktelement hinein allein durch ziehende Bewegung des gestreckten Wicklungsdrahtes geführt werden kann. Der Wicklungsdraht kann lediglich an einer einzigen Position ergriffen, gestreckt und dann gestreckt durch Bewegung des Angriffspunktes um das eine oder mehrere Umlenkelement/e und in der beschriebenen Weise von der Rückseite her um das Kontaktelement herum und in dieses hineingeführt werden. So ist eine Manipulation des gestreckten Drahtes allein durch Bewegung eines einzelnen Angriffspunktes möglich. Diese Bewegung ist eine allein ziehende Bewegung, d. h. bei der Führung des Drahtes bei dessen Montage bleibt der Draht gestreckt und es müssen keine seitlichen Druckkräfte auf den Draht aufgebracht werden, um diesen in Nuten oder ähnliches hinein zu drücken. So wird eine einhändige Handhabung möglich, welche ohne weiteres durch einen Roboter ausführbar ist. Das eine oder die mehreren Umlenkelement/e sorgen dafür, dass der Draht zum einen stets gestreckt geführt werden kann und zum anderen von der Rückseite her, d. h. von einer parallel zum Radius gesehenen weiter innen liegenden Position her zu dem Kontaktelement, welches vorzugsweise radial nach außen geöffnet ist, geführt werden kann und dann von der radialen Außenseite her an oder in das Kontaktelement gezogen werden kann. Würde der Wicklungsdraht in der radialen Richtung bzw. in einer Richtung parallel zum Radius gesehen vor dem Kontaktelement austreten, könnte der Wicklungsdraht nur durch Druckkräfte in das Kontaktelement bzw. an das Kontaktelement bewegt werden. Dadurch, dass der Wicklungsdraht von der Rückseite her an das Kontaktelement bewegt wird, kann er um das Kontaktelement herumgezogen und durch Zurückziehen in der Richtung, aus welcher er zugeführt wurde, in das Kontaktelement hineingezogen werden.

Gemäß einer weiteren bevorzugen Ausführungsform weist das Kontaktelement in zumindest einer Wandung seines Aufnahmeraumes zumindest einen sich ausgehend von dessen Öffnung zu dem Boden erstreckenden Schlitz auf, in welchen der Wicklungsdraht eingeführt ist. Der Schlitz erstreckt sich so vorzugsweise parallel zum Radius oder entlang dem Radius des Stators. Besonders bevorzugt sind zwei solche Schlitze an zwei gegenüberliegenden Wandungen des Aufnahmeraumes ausgebildet, wobei die Schlitze sich so erstecken, dass ein Draht, welcher in die Schlitze hineingezogen ist, sich in axialer Richtung, d. h. parallel zur Längsachse des Statorkörpers erstreckt. Die Schlitze sind dabei bevorzugt zu der Öffnung des Aufnahmeraumes hin geöffnet, sodass der Draht in die Schlitze in einer Richtung quer zur Längsachse des Statorkörpers in die Schlitze hineingezogen werden kann. Anschließend kann in den Aufnahmeraum ein Metallelement zur Kontaktierung und Fixierung des Wicklungsdrahtes in den Aufnahmeraum eingesetzt werden.

Auf das erste axiale Ende des Statorkörpers ist eine Wicklungsschutzkappe, insbesondere eine Wicklungsschutzkappe aus Kunststoff, aufgesetzt, und es ist zumindest eine Austrittsöffnung vorhanden, durch welche der Wicklungsdraht aus dem Statorkörper nach außen tritt. Die Austrittsöffnung kann in dem Statorkörper oder der Wicklungskappe vorgesehen sein. Besonders bevorzugt ist sie jedoch zwischen dem Statorkörper und der Wicklungsschutzkappe gelegen. Dies ermöglicht es, den Wicklungsdraht auf dem Statorkörper zu wickeln, bevor die Wicklungsschutzkappe aufgesetzt wird. Anschließend wird die Wicklungsschutzkappe auf den Statorkörper aufgesetzt, wobei vorzugsweise im Berührungsbereich zwischen Wicklungsschutzkörper und Statorkörper eine Öffnung verbleibt, durch welche sich der Wicklungsdraht nach außen erstreckt. Auf diese Weise wird vermieden, dass der Wicklungsdraht durch eine Öffnung in der Wicklungsschutzkappe gefädelt werden muss. Zum Ausbilden der Öffnung kann an einem dem Statorkörper zugewandten Axialende der Wicklungsschutzkappe eine Ausnehmung ausgebildet sein. Alternativ oder zusätzlich kann eine entsprechende Ausnehmung an einem der Wicklungsschutzkappe zugewandten Axialende des Statorkörpers vorgesehen sein.

Die Austrittsöffnung für den Wicklungsdraht ist weiter bevorzugt am Außenumfang der Wicklungsschutzkappe gelegen und vorzugsweise radial nach außen gerichtet. So können die Wicklungsdrähte nach dem Wickeln im Statorkörper radial nach außen geführt werden und sich zunächst vor der Führung zu dem Kontaktelement radial nach außen aus den Austrittsöffnungen heraus erstrecken. Vorzugsweise ist für jeden Wicklungsdraht eine einzelne Austrittsöffnung vorgesehen. Für den Fall, dass jeweils zwei Wicklungen zu einem Wicklungspaar verbunden sind, wird die Verbindungsleitung bevorzugt direkt am Statorkörper geführt, sodass von jeder Wicklung nur ein Ende des Wicklungsdrahtes nach außen aus einer Austrittsöffnung herausgeführt wird. Für den Fall, dass beispielsweis drei Wicklungspaare mit insgesamt sechs Wicklungen angeordnet sind, wobei jeweils zwei gegenüberliegende Wicklungen direkt miteinander verbunden sind, sind somit sechs Wicklungsdrähte an sechs verschiedenen Winkelpositionen auf diese Weise aus dem Statorkörper nach außen zu führen.

Das zumindest eine Kontaktelement ist an einer axial dem Statorkörper abgewandten Stirnseite der Wicklungsschutzkappe angeordnet. Besonders bevorzugt ist das Kontaktelement bzw. dessen tragende Struktur aus Kunststoff einstückig mit der Wicklungsschutzkappe gefertigt. Dies ermöglicht eine kostengünstige Fertigung und einfache Montage.

Weiter bevorzugt ist auch das zumindest eine Umlenkelement an der Wicklungsschutzkappe angeordnet und vorzugsweise einstückig mit der Wicklungsschutzkappe, insbesondere aus Kunststoff ausgebildet. Besonders bevorzugt sind alle Umlenkelemente an der Wicklungsschutzkappe einstückig mit dieser, insbesondere aus Kunststoff ausgebildet. Dies ermöglicht eine kostengünstige und einfache Fertigung. Darüber hinaus hat die Ausbildung der Umlenkelemente aus Kunststoff den Vorteil, dass der Wicklungsdraht elektrisch isoliert geführt werden kann.

Besonders bevorzugt sind mehrere Kontaktelemente nebeneinander angeordnet und bilden so eine Kontaktelementgruppe, wobei jeweils ein Wicklungsdraht einer Stahlverwicklung in eines der Kontaktelemente geführt ist. So können die mehreren Kontaktelemente bzw. deren tragende Struktur, insbesondere Aufnahmeräume, einteilig bzw. einstückig z. B. aus Kunststoff geformt werden. Darüber hinaus hat die nebeneinanderliegende Anordnung der Kontaktelemente den Vorteil, dass die elektrische Kontaktierung, beispielsweise das Einsetzen von Metallelementen in entsprechende Aufnahmeräume von derselben Seite her für mehrere Kontaktelemente erfolgen kann, was die Montage vereinfacht. Ferner ist diese Anordnung von Vorteil, wenn über die Kontaktelemente eine weitere Kontaktierung mit externen Bauteilen erfolgen soll. Diese kann somit an einer zentralen Stelle erfolgen. Bevorzugt ist eine Kontaktelementgruppe so ausgebildet, dass in der Kontaktelementgruppe für jede Phase des Stators zumindest ein Kontaktelement vorgesehen ist. D. h. bei einem Stator mit beispielsweise drei Spulen- bzw. Wicklungspaaren sind in der Kontaktelementgruppe drei Kontaktelemente nebeneinanderliegend angeordnet. In der Kontaktelementgruppe sind die Kontaktelemente vorzugsweise so nebeneinanderliegend angeordnet, dass ihre Einsetzrichtungen, d. h. die Richtungen, in welchen die Wicklungsdrähte in die Kontaktelemente geführt werden, parallel zueinander gerichtet sind. In dem Fall, dass die Kontaktelemente, wie oben beschrieben, Aufnahmeräume aufweisen, sind somit die Öffnungen der Aufnahmeräume alle zur selben Seite des Stators gerichtet. Die Einsetzrichtungen liegen bevorzugt parallel zum Radius des Stators.

Vorzugsweise ist eine erste Kontaktelementgruppe vorhanden, deren Kontaktelemente elektrisch leitend miteinander verbunden sind. Eine solche elektrische Verbindung kann beispielsweise durch eingesetzte Metallelemente, welche die Kontaktelemente miteinander verbinden, erfolgen. Eine solche Kontaktelementgruppe, deren Kontaktelemente miteinander verbunden sind, kann den Sternpunkt für die Verschaltung der Wicklungen bzw. Spulen des Stators bilden. So sind beispielsweise alle Wicklungen bzw. Wicklungspaare in einem Sternpunkt miteinander verbunden. Für den Fall, dass drei Wicklungspaare vorgesehen sein sollten, ist somit jedes Wicklungspaar mit einem Ende des Wicklungspaares an dem Sternpunkt angeschlossen. Die drei anderen Enden können einzeln mit elektrischen Anschlüssen des Stators zur phasenweisen Bestromung verbunden werden.

Weiter bevorzugt ist eine zweite Kontaktelementgruppe vorhanden, welche einen Verbinder, insbesondere einen Steckverbinder zum elektrischen Anschluss des Stators bildet. D. h. in der zweiten Kontaktelementelementgruppe sind die einzelnen Kontaktelemente bevorzugt nicht elektrisch leitend miteinander verbunden und zum Anschluss der einzelnen Wicklungen bzw. Wicklungspaare, d. h. Phasen des Stators vorgesehen. Während bevorzugt jeweils ein Ende der Wicklungen bzw. Wicklungspaare mit dem vorangehend beschriebenen Sternpunkt verbunden ist, ist das jeweils andere Ende des Wicklungsdrahtes dann mit einem Kontaktelement der zweiten Kontaktelementgruppe verbunden. Für einen dreiphasigen Motor weist die Kontaktelementgruppe somit bevorzugt drei Kontaktelemente auf. Bevorzugt sind diese als Steckverbinder ausgebildet, sodass ein elektrischer Anschlussstecker auf diesen aufgesetzt werden kann, um den Stator mit einer elektrischen Anschlussleitung bzw. mit elektronischen Bauteilen zur Ansteuerung des Stators zu verbinden. Es ist jedoch zu verstehen, dass die zweite Kontaktelementgruppe auch zur anderweitigen Kontaktierung mit elektrischen Anschlussdrähten oder Kabeln ausgebildet sein kann. So können die Kontaktelemente der zweiten Kontaktelementgruppe zum Verlöten mit externen Anschlussdrähten oder zur Klemm- oder Schneidkontaktierung mit elektrischen Anschlussdrähten ausgebildet sein.

Gemäß einer weiteren bevorzugten Ausführungsform kann eine Kontaktelementgruppe, insbesondere die zweite Kontaktelementgruppe noch zusätzliche Kontaktelemente aufweisen, welche nicht mit den Wicklungen des Stators verbunden sind, sondern beispielsweise mit einem in dem Stator angeordneten Sensor. Dies ist insbesondere dann von Vorteil, wenn die zugehörige Kontaktelementgruppe als elektrischer Anschluss für den Stator ausgebildet ist, da dann an diesem elektrischen Anschluss, welcher bevorzugt als Steckverbinder ausgebildet ist, neben den Statorwicklungen beispielsweise gleichzeitig ein Sensor elektrisch kontaktiert werden kann.

Weiter bevorzugt ist zumindest ein Umlenkelement vorhanden, welches sich in axialer Richtung des Stators erstreckt. Besonders bevorzugt erstreckt sich dieses zumindest eine Umlenkelement in axialer Richtung von der Wicklungsschutzkappe in einer dem Statorkörper abgewandten axialen Richtung. Die Umlenkelemente erstrecken sich somit parallel zur Längs- bzw. Mittelachse des Stators, welche der Drehachse eines in dem Stator einzusetzenden Rotors entspricht.

Gemäß einer speziellen Ausführungsform sind zumindest zwei Umlenkelemente vorhanden, welche sich in axialer Richtung erstrecken und unterschiedliche axiale Längen aufweisen, wobei vorzugsweise um ein erstes kürzeres Umlenkelement ein erster Wicklungsdraht und um ein zweites längeres Umlenkelement ein zweiter Wicklungsdraht geführt ist. Diese Anordnung hat den Vorteil, dass bei der Führung des zweiten Wicklungsdrahtes dieser über das Umlenkelement für den ersten Wicklungsdraht hinweggeführt werden kann, ohne durch dieses umgelenkt zu werden. Die Wicklungsdrähte werden somit nacheinander angeordnet. So ist es möglich, Umlenkelemente für einzelne Wicklungsdrähte vorzusehen, welche die Führung der anderen Wicklungsdrähte nicht stören bzw. nicht behindern. Die Wicklungsdrähte können einzeln von ihrem Austritt am Statorkörper zu dem Kontaktelement geführt werden, d. h. einzeln angebracht und um die Umlenkelemente gelenkt werden.

Bevorzugt ist zumindest ein Umlenkelement als Stift oder als eine ein- oder mehrfach gekrümmte und/oder abgewinkelte Wandung ausgebildet. Durch die Krümmung bzw. Abwinklung der Wandung und dem Durchmesser des Stiftes kann der Biegeradius des Wicklungsdrahtes bei der Umlenkung beeinflusst werden. Durch eine abgewinkelte oder gekrümmte Wandung kann dabei ferner der Winkel bzw. die Richtungen des Wicklungsdrahtes ausgehend von dem Umlenkpunkt bzw. Umlenkelement definiert werden.

Gemäß einer weiteren bevorzugten Ausführungsform tritt der Wicklungsdraht in radialer Richtung aus dem Statorkörper aus und ist in Richtung seiner weiteren Erstreckung über ein oder mehrere Umlenkelement zuerst in umfänglicher, anschließend in axialer Richtung und nachfolgend radial nach innen umgelenkt. Auf diese Weise wird der Wicklungsdraht von seinem radialen Austritt zunächst auf die axiale Stirnseite des Statorkörpers bzw. der dort angebrachten Wicklungsschutzkappe geführt und kann dann dort über ein oder mehrere Umlenkelemente in der oben beschriebenen Weise zu dem Kontaktelement geführt werden, wobei der Wicklungsdraht sich von der Rückseite her zu dem Kontaktelement erstreckt und um das Kontaktelement herum an dessen Vorderseite zur Kontaktierung geführt wird. Die beschriebene Auslenkung am Austritt hat den Vorteil, dass auch hier die Führung allein mithilfe eines gestreckten Drahtes möglich ist. So wird der Draht, welcher radial aus dem Statorkörper austritt, ergriffen, gestreckt, dann zunächst so geführt, dass er sich in Umfangsrichtung erstreckt. Dann wird er in axialer Richtung um ein erstes Umlenkelement gezogen, sodass sich der weitere Verlauf axial erstreckt. Dann kann er über ein weiteres Umlenkelement, welches von der Kante der Wicklungsschutzkappe gebildet werden kann, radial nach innen gezogen werden, sodass er sich über die Axialseite des Statorkörpers bzw. der Wicklungsschutzkappe erstreckt. Dort wird er dann gegebenenfalls weiter um ein oder mehrere Umlenkelemente geführt.

An dem zumindest einen Kontaktelement ist vorzugsweise zumindest ein sich radial nach außen bzw. parallel zum Radius nach außen erstreckendes Führungselement angeordnet, welches sich über die Öffnung oder Vorderseite des Kontaktelementes hinaus in radialer Richtung erstreckt und um welches herum der Wicklungsdraht zu dem Kontaktelement geführt ist. Dieses Führungselement ermöglicht es, dass der Wicklungsdraht zunächst, wie oben beschrieben, von der Rückseite des Kontaktelementes an dieses herangeführt wird, an dem Kontaktelement vorbeigeführt wird und dann um das Führungselement herumgeführt wird, um dann von der Vorderseite her das Kontaktelement zu kontaktieren bzw. von der Vorderseite her in eine Öffnung des Kontaktelementes hineingezogen zu werden. Die Vorderseite ist dabei zur Außenseite des Stators bzw. Statorkörpers hin gewandt. Der Wicklungsdraht wird in radialer Richtung bzw. parallel zum Radius an das Kontaktelement herangezogen bzw. in dieses hereingezogen.

Der beschriebene Stator eines Elektromotors ist insbesondere vorgesehen zum Einsatz in einem Pumpenaggregat, weiter bevorzugt einem Heizungsumwälzpumpenaggregat, Dabei kann im Inneren des Stators ein Spaltrohr angeordnet sein. Gegenstand der Erfindung ist somit auch ein solcher Elektromotor und weiter bevorzugt ein solches Pumpenaggregat bzw. Heizungspumpenaggregat mit einem solchen Stator in seinem elektrischen Antriebsmotor.

Die Erfindung ermöglicht ein einfaches Verfahren zum Einführen eines Wicklungsdrahtes einer Statorwicklung eines Stotors in ein an einer axialen Stirnseite des Stotors angeordnetes Kontaktelement. Dieses Verfahren ist mit dem zuvor beschriebenen Stator ausführbar, wobei bzgl. Details der Verfahrensschritte auch auf die vorangehende Beschreibung bzw. die Vorteile und Verwendung des Stators verwiesen wird. Das Verfahren setzt nach dem Aufbringen der Statorwicklungen auf einem Statorkörper ein. In einem ersten Schritt wird der Wicklungsdraht, insbesondere dessen freies Ende, welches aus dem Statorkörper herausgeführt ist, ergriffen. Anschließend wird durch Ziehen des Angriffspunktes der Draht gerade gestreckt. Anschließend wird in weiteren Schritten dieser gestreckte Draht allein durch ziehende Bewegung weiter geführt. So wird der ergriffene und gestreckte Wicklungsdraht durch Bewegung des Angriffspunktes, an welchem der Wicklungsdraht ergriffen ist, um ein oder mehrere Umlenkelemente an der axialen Stirnseite des Stators bewegt, sodass der Wicklungsdraht zu dem Kontaktelement geführt wird. Dabei erstreckt sich der Wicklungsdraht durch die ziehende Bewegung des Wicklungsdrahtes zwischen den Umwälzpumpen stets gestreckt. Der Wicklungsdraht wird über die Umlenkelemente so zu dem Kontaktelement geführt, dass er allein durch ziehende Bewegung an seinem Angriffspunkt in eine Kontaktposition mit dem Kontaktelement gezogen wird. D. h. es ist eine einhändige Manipulation bzw. des Wicklungsdrahtes möglich, welche vorzugsweise durch einen Roboter ausgeführt wird. Es ist zu verstehen, dass der Angriffspunkt während der Manipulation des Wicklungsdrahts an den Wicklungsdraht versetzt werden kann. So kann beispielweise eine Zange oder ein Zangenmaul, welches den Wicklungsdraht ergreift, leicht gelöst werden, sodass der Wicklungsdraht um ein gewisses Maß durch das Maul hindurchgleitet. Anschließend kann das Maul wieder geklemmt werden und der Draht kann weiter manipuliert oder geführt werden, wobei er stets im gestreckten Zustand verbleibt.

Wie oben beschrieben, wird der Wicklungsdraht über die Umlenkelemente erfindungsgemäß so bewegt, dass er von der Rückseite her an das Kontaktelement, d. h. von der einer Einsetz- bzw. Kontaktseite abgewandten Seite her an das Kontaktelemente herangeführt wird. Anschließend wird der Wicklungsdraht um das Kontaktelement herum geführt und an seiner Vorderseite, welche eine Einsetz- bzw. Kontaktseite bildet, mit dem Kontaktelement kontaktiert bzw. in dieses hineingeführt. Dabei kann das Kontaktelement in der oben beschriebenen Weise ausgestaltet sein. Wenn das Kontaktelement eine Grundstruktur aus Kunststoff aufweist, kann der Wicklungsdraht beispielsweise zunächst in einen Aufnahmeraum dieses Kunststoffkörpers eingeführt werden und anschließend kann ein metallisches Element des Kontaktelementes in den Aufnahmeraum zur Kontaktierung des Wicklungsdrahtes eingesetzt werden, wobei das metallische Element gleichzeitig den Wicklungsdraht in dem Aufnahmeraum fixiert.

Die Erfindung wird nachfolgend beispielhaft anhand der beigefügten Figuren beschrieben. In diesen zeigt:
- Fig. 1: eine perspektivische Ansicht eines Stators gemäß der Erfindung,
- Fig. 2: eine perspektivische Ansicht des Stators gemäß Fig. 1 in einer anderen Blickrichtung,
- Fig. 3 und 4: eine perspektivische Ansicht des Stators gemäß Fig. 1 und 2 bei der Anbringung eines ersten Wicklungsdrahtes,
- Fig. 5: eine perspektivische Ansicht des Stators gemäß der vorangehenden Figuren bei der Anbringung eines zweiten Wicklungsdrahtes, welche nicht erfindungsgemäß erfolgt,
- Fig. 6 und 7: eine perspektivische Ansicht des Stators gemäß der vorangehenden Figuren bei der Anbringung eines dritten Wicklungsdrahtes, und
- Fig. 8 und 9: eine perspektivische Ansicht des Stators gemäß der vorangehenden Figuren bei der Anbringung eines vierten Wicklungsdrahtes.

Der gezeigte Stator weist einen Statorkörper 2 auf, welcher in bekannter Weise ein Blechpaket beinhaltet, welches radial nach innen gerichtete Zähne aufweist. Auf diesen Zähnen sind Wicklungsträger 4 aus Kunststoff aufgesetzt, welche als Isolationselemente dienen und auf welche die Statorwicklungen gewickelt sind. Der Statorkörper 2 ist ringförmig ausgebildet und umschließt einen zentralen Aufnahmeraum 6 mit kreisförmigem Querschnitt, welcher zur Aufnahme des Rotors des Elektromotors vorgesehen ist. In dem Aufnahmeraum 6 kann zwischen dem Statorkörper 2 und dem Rotor ein Spaltrohr angeordnet sein, um einen nasslaufenden Elektromotor auszubilden, wie er in Pumpenaggregaten Verwendung findet. Auf ein erstes axiales Ende des Statorkörpers 2 ist eine Wicklungsschutzkappe 8 aufgesetzt, welche die Wicklungsköpfe der Statorwicklungen überdeckt und so zum Schutz und zur Isolation der Wicklungen nach außen dient. Zwischen dem Statorkörper 2 und der Wicklungsschutzkappe 8 sind Ausnehmungen angeordnet, welche Austrittsöffnungen 10, 12, 14, 16, 18 und 20 bilden, welche an unterschiedlichen Winkel positionen bzgl. der Längs- bzw. Mittelachse X des Stators gelegen sind. Durch die Austrittsöffnungen 10-20 sind Wicklungsdrähte 22, 24, 26, 28, 30 und 32 nach außen aus dem Statorkörper 2 herausgeführt. Dabei sind die Austrittsöffnungen 10-20 radial nach außen geöffnet und die Wicklungsdrähte 22 - 32 erstrecken sich zunächst, bevor sie weiter an der Wicklungsschutzkappe 8 geführt sind radial nach außen.

Im gezeigten Beispiel ist der Stator ein Stator eines dreiphasigen Elektromotors. D. h. der Stator weist sechs Wicklungen bzw. Spulen auf, von denen jeweils zwei gegenüberliegende zu einem Wicklungs- bzw. Spulenpaar miteinander verbunden sind. Die Verbindung der beiden Wicklungen der Wicklungspaare erfolgt über am zweiten axialen Ende 34 geführte Verbindungsdrähte 36. Die Wicklungen sind direkt im Statorkörper 2 gewickelt. So sind die Verbindungsdrähte 36 vom Wicklungsdraht der Wicklungen selber gebildet. Nach Wickeln der ersten Wicklung des Wicklungspaares wird der Verbindungsdraht 36 am Außenumfang des Statorkörpers 2 entlang zur entgegengesetzten Seite geführt und es wird dann dort die zweite Wicklung des Wicklungspaares gewickelt. Jedes Wicklungspaar hat somit insgesamt zwei freie Wicklungsdrähte, welche durch die Austrittsöffnungen 10-20 radial nach außen geführt sind.

In der Wicklungsschutzkappe 8 sind zwei Kontaktelementgruppen 38 und 40 ausgebildet. Die erste Kontaktelementgruppe 38 bildet einen Sternpunkt für die Wicklungen des Stators. Die Kontaktelementgruppe 38 weist einen Körper aus Kunststoff auf, welcher einstückig mit der Wicklungsschutzkappe gegossen ist. In diesem Körper sind drei Kontaktelemente 42 mit Aufnahmeräumen ausgebildet, welche zur radialen Außenseite des Statorkörpers 2 hin geöffnet sind und einen radial weiter innen liegenden Boden 44 aufweisen. Die Aufnahmeräume der Kontaktelemente 42 weisen an ihren axialen Begrenzungswänden Schlitze 45 auf, durch welche die Wicklungsdrähte 22, 30 und 32 geführt sind. Von außen ist in den Aufnahmeraum nach dem Einführen der Wicklungsdrähte 22, 30 und 32 ein metallisches Element eingesetzt, welches die Wicklungsdrähte 22, 30 und 32 kontaktiert und elektrisch leitend miteinander verbindet. Die Wicklungsdrähte 22, 30 und 32 stellen dabei die Enden dreier verschiedener Wicklungspaare dar. Die zugehörigen zweiten Wicklungsdrähte 24, 26 und 28 dieser drei Wicklungspaare sind zu der zweiten Kontaktelementgruppe 40 geführt. Diese bildet einen Anschlussstecker für den Stator.

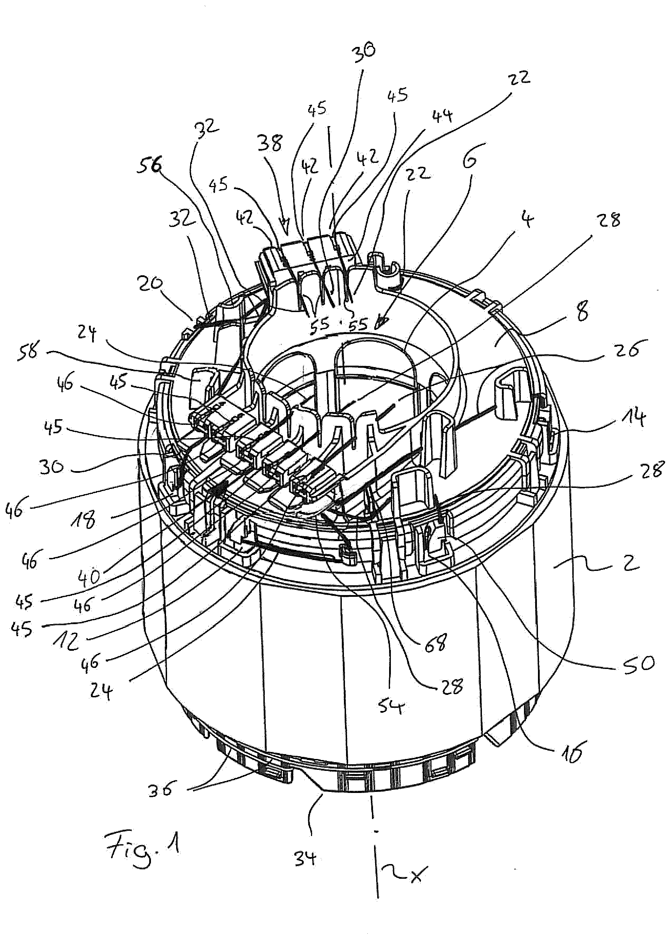

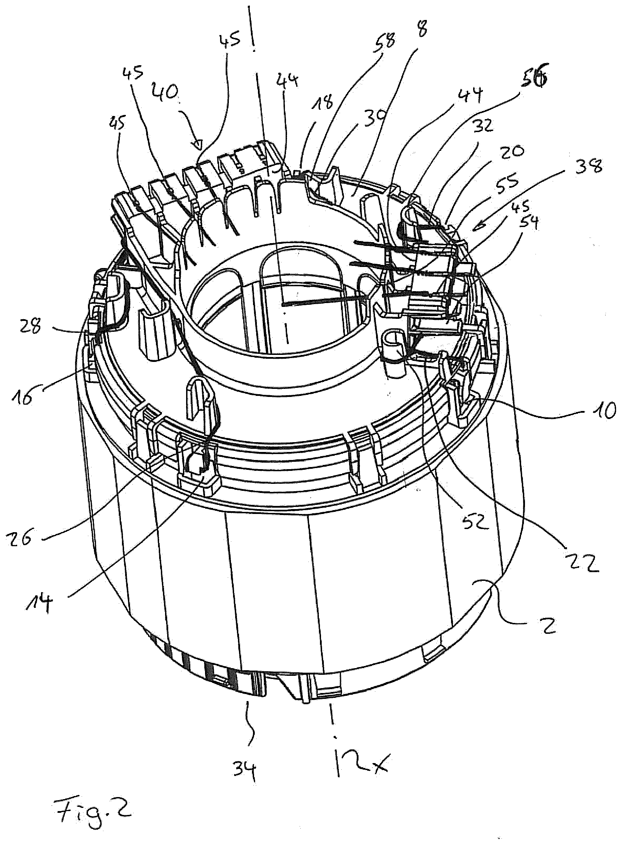

Die zweite Kontaktelementgruppe 40 weist fünf Kontaktelemente 46 auf, welche ebenfalls einen Aufnahmeraum haben, welcher radial nach außen bezogen auf die Längsachse X geöffnet ist. Die an den Aufnahmeraum angrenzenden Axialwände sind hier ebenfalls mit Schlitzen 45 versehen, durch welche die Wicklungsdrähte 24, 26 und 28 geführt sind. Von außen sind in die Aufnahmeräume der Kontaktelemente 46 nach dem Einsetzen der Wicklungsdrähte 24, 26 und 28 metallische Elemente eingesetzt, welche Steckkupplungen definieren, die Wicklungsdrähte 24, 26 und 28 kontaktieren und in den Kontaktelementen 46 fixieren. Dabei sind an der zweiten Kontaktelementgruppe die metallischen Teile der Kontaktelemente 46 nicht miteinander verbunden. Die zwei Kontaktelemente 46, in welchen in Figuren 1 und 2 keine Drähte gezeigt sind, dienen zur Verbindung eines Sensors. Zur Kontaktierung des Stators bzw. zum elektrischen Anschluss des Stators und zur Verbindung mit einer geeigneten Steuerelektronik kann auf den von der zweiten Kontaktelementgruppe 40 gebildeten Steckverbinder ein korrespondierender Stecker zur Kontaktierung der Kontaktelemente 46 von außen aufgesetzt werden.

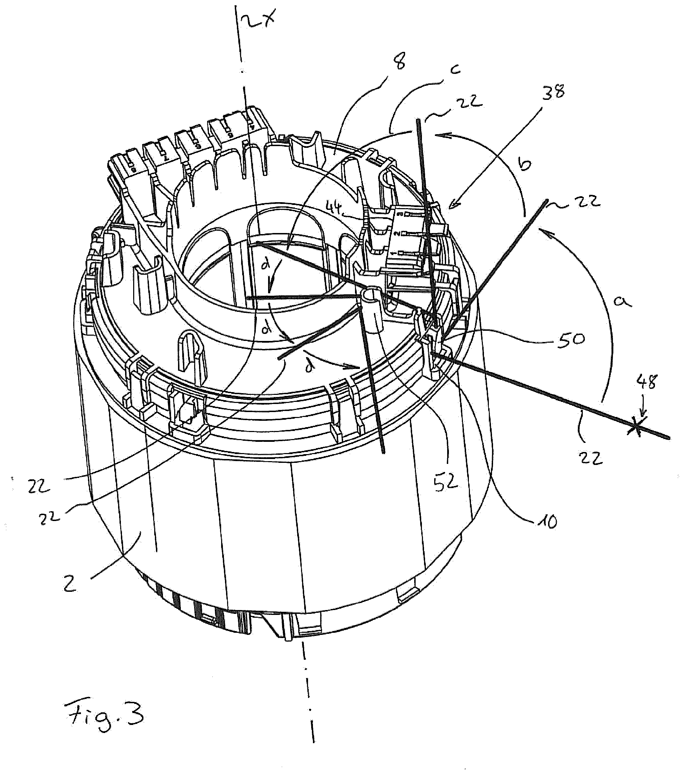

Erfindungswesentlich ist, dass die Wicklungsdrähte 22 - 32 jeweils so an die Kontaktelementgruppen 38, 40 herangeführt sind, dass sämtliche Wicklungsdrähte 22 - 32 von der Rückseite her, d. h. von einer Position, welche parallel zum Radius bezogen auf die Längsachse X hinter dem Boden 44 der Kontaktelementgruppen 38, 40, d. h. weiter innen gelegen ist, zugeführt werden. Die Richtung parallel zum Radius erstreckt sich dabei normal auf den Boden 44, welcher sich tangential bzw. sehnenförmig zur Längsachse X erstreckt. Ferner verlaufen die Wicklungsdrähte 22 - 32 stets gestreckt, sodass es möglich ist, diese allein durch ziehende Bewegung an der Wicklungsschutzkappe 8 zu verlegen, was nachfolgend anhand der Figuren 3 - 9 näher beschrieben wird. Zur Führung der Wicklungsdrähte sind an der Wicklungsschutzkappe verschiedene Umlenkelemente bzw. Umlenkpunkte ausgebildet, zwischen denen die Wicklungsdrähte 22 - 32 gestreckt geführt sind.

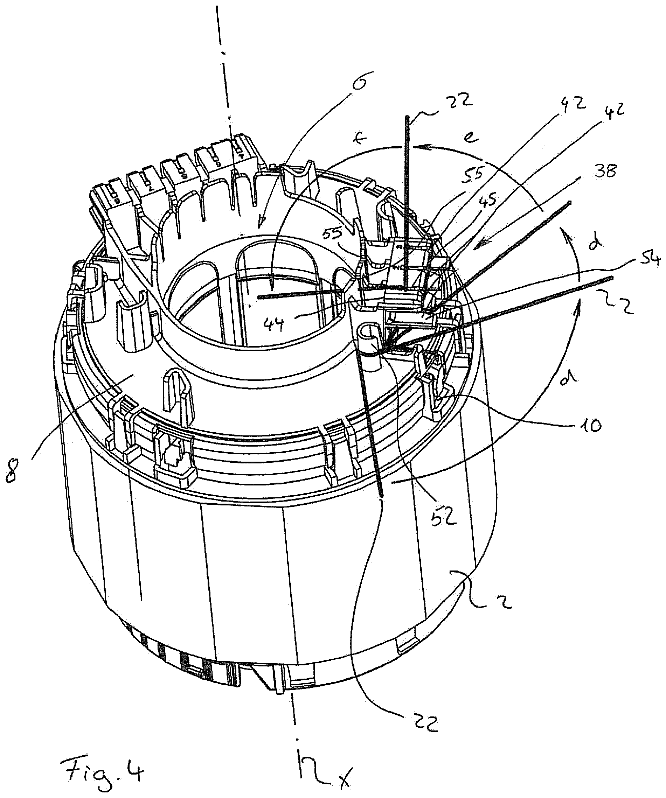

Anhand der Figuren 3 und 4 wird zunächst die Anbringung bzw. Führung des ersten Wicklungsdrahtes 22 näher beschrieben. In den Figuren 3 und 4 ist die Bewegung des Wicklungsdrahtes 22 in verschiedenen Schritten dargestellt. Zunächst erstreckt sich der Wicklungsdraht 22 in radialer Richtung bezogen auf die Längsachse X aus der zugehörigen Austrittsöffnung 10 zwischen Wicklungsschutzkappe 8 und Statorkörper 2 nach außen. Der Wicklungsdraht 22 kann dann an einem Angriffspunkt 48 von einer Zange oder einem Greifinstrument ergriffen werden und gespannt bzw. gestreckt werden. In dieser gestreckten Position erfolgt dann zunächst eine Umlenkung bzw. Bewegung a in einem Winkel von im Wesentlichen 90°, sodass sich der Wicklungsdraht 22 dann zunächst in Umfangsrichtung bzw. tangentialer Richtung erstreckt. Anschließend wird der Wicklungsdraht 22 um ein direkt an der Austrittsöffnung angeordnetes Umlenkelement 50 in einer zweiten Bewegung b ebenfalls wieder in einem Winkel von im Wesentlichen 90° umgelenkt, sodass er sich parallel zur Längsachse X erstreckt. Im nächsten Schritt wird in einer Bewegung c der Wicklungsdraht noch einmal im Wesentlichen um 90° umgelenkt bzw. umgebogen, sodass er sich dann im Wesentlichen radial zur Längsachse X nach innen erstreckt.

An der Wicklungsschutzkappe 8 ist ein erstes sich axial, d. h. parallel zur Längsachse X erstreckendes Umlenkelement 52 angeordnet, welches durch eine gebogene Wand gebildet wird. Um dieses wird der Wicklungsdraht 22 in einer Bewegung d um 360° herumgeschlungen, wie in Fig. 3 und 4 zu erkennen ist. So wird der Wicklungsdraht 23 unter ein Führungselement 54 gebracht, welches sich radial bzw. parallel zum Radius bezogen auf die Längsachse X zwischen den Kontaktelementen 42 und dem Statorkörper 2 erstreckt. Anschließend wird der Wicklungsdraht 22 in einer Bewegung e um das Führungselement 54 in einem Winkel vom im Wesentlichen 90° herum umgelenkt, sodass er sich wieder im Wesentlichen parallel zur Längsachse X von dem Statorkörper 2 erstreckt. Bei dieser Bewegung wird der Wicklungsdraht 22 radial nach innen in den Schlitz 45 des ersten Kontaktelementes hinein gezogen. Anschließend wird in einer Bewegung f der Wicklungsdraht 22 noch einmal radial nach innen umgelenkt und in einen Schlitz 55 in einer den Aufnahmeraum 6 begrenzenden Wandung der Wicklungsschutzkappe 8 eingeführt, wo der Wicklungsdraht 22 dann zunächst fixiert wird. Nachdem auch die Wicklungsdrähte 30 und 32 in die erste Kontaktelementgruppe 40 eingeführt sind, kann dann in die Kontaktelemente 42 bzw. deren Aufnahmeräume ein metallisches Verbindungselement eingesetzt werden. Anschließend können die Enden der Wicklungsdrähte 20, 30, 32, welche sich in den Schlitzen 55 befinden, abgeschnitten werden.

Wesentlich für die Erfindung ist, dass das Umlenkelement 52 in einer Richtung normal zu dem Boden 44 der ersten Kontaktelementgruppe 40, welche sich parallel zum Radius bezogen auf die Längsachse X erstreckt, radial weiter innen, d. h. hinter dem Boden 44 gelegen ist. So wird der Wicklungsdraht, wenn er um das Umlenkelement 52 herumgeschlugen ist, von der Rückseite her, d. h. von einer Position, welche von radial außen her gesehen, hinter dem Boden 44 gelegen ist, zu dem Kontaktelement 42 zugeführt. Anschließend wird der Wicklungsdraht 22 jedoch von radial außen in das entsprechende Kontaktelement 42 eingeführt. Wie zu erkennen ist, ist dies allein durch eine ziehende Bewegung des gestreckten Drahtes möglich. Sämtliche Bewegungen können durch Manipulation allein des Angriffspunktes 48 durchgeführt werden. So ist eine einhändige Manipulation des Wicklungsdrahtes 22, um diesen von der Austrittsöffnung zu der Kontaktelementgruppe 38 zu führen, möglich. Entsprechend können auch die beiden anderen Wicklungsdrähte 30 und 32 von hinten an die erste Kontaktelementgruppe, d. h. von der Innenseite her zugeführt werden, wie in Figuren 1 und 2 gezeigt ist. Der Wicklungsdraht 32 ist dazu um ein Umlenkelement 56 geführt, welches sich als gekrümmte bzw. gewinkelte Wand ebenfalls in axialer Richtung von der Axialseite der Wicklungsschutzkappe 8 wegerstreckt. Der Wicklungsdraht 30 wird an dem Umlenkelement 58 vorbei ebenfalls von der Rückseite her der ersten Kontaktelementgruppe 38 zugeführt.

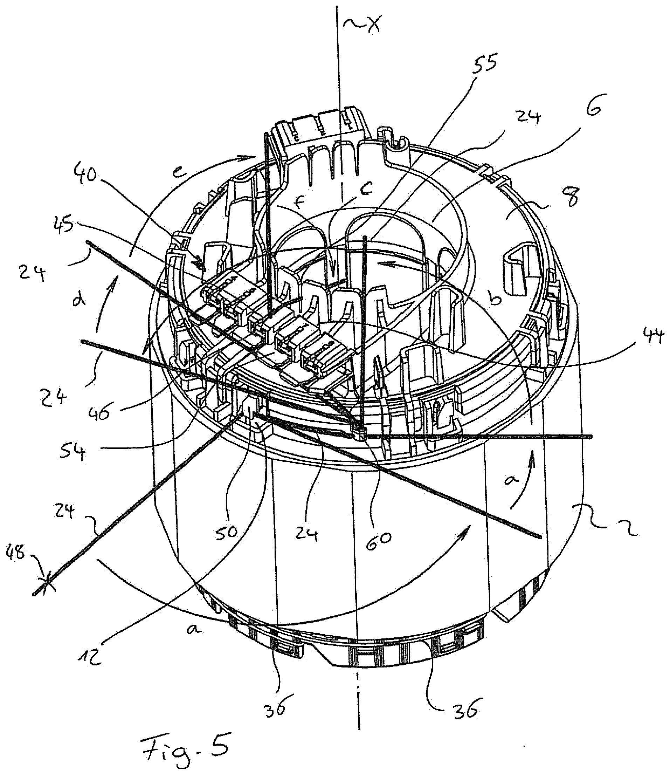

Anhand von Fig. 5 wird die Führung des Wicklungsdrahtes 24 beschrieben, welcher aus der Austrittsöffnung 12 zunächst ebenfalls in radialer Richtung bezogen auf die Längsachse X austritt. Auch an der Austrittsöffnung 12 ist ein erstes Umlenkelement 50 angeordnet. Der Wicklungsdraht 24 wird zunächst in einer ersten Bewegung a um einen Winkel von 90° in tangentiale bzw. Umfangsrichtung verschwenkt. Anschließend wird er um ein hakenförmiges Umlenkelement 60, welches sich am Außenumfang der Wicklungsschutzkappe 8 befindet in einer Bewegung b im Wesentlichen wieder um 90° so verschwenkt, dass der Wicklungsdraht 24 sich in axialer Richtung im Wesentlichen parallel zur Längsachse X erstreckt. In einer nächsten Bewegung c wird der Wicklungsdraht 24 noch einmal im Wesentlichen um 90° verschwenkt, sodass er sich im Wesentlichen wieder in tangentialer Richtung erstreckt. Dabei wird das Umlenkelement 60 im Wesentlichen um 180° umschlungen, sodass sich die Erstreckungsrichtung des Wicklungsdrahtes 24 um 180° ändert. Als nächstes wird der Wicklungsdraht 24 in einer Bewegung d unter ein Führungselement 54 geführt, welches zwischen der Kontaktelementgruppe und dem Statorkörper 2 gelegen ist. Das Führungselement 54 erstreckt sich in radialer Richtung weiter nach außen als die Kontaktelemente 46. Im nächsten Schritt wird der Wicklungsdraht noch einmal in der Bewegung e um etwa 90° in die axiale Richtung verschwenkt und dann radial nach innen in den Schlitz 45 des zugehörigen Kontaktelementes 46 hineingezogen. Anschließend wird in einer Bewegung f der Wicklungsdraht um 90° radial nach innen umgelenkt, wobei in einem Schlitz 55 in der Umfangswand des Aufnahmeraumes 6 geführt wird und dort fixiert wird.

Der Wicklungsdraht 24 wird über das Führungselement 54 umgelenkt und dann von vorne in den Schlitz 45 des Kontaktelementes 46 eingezogen. Auch hier ist eine Bewegung des Wicklungsdrahtes 24 allein durch ziehende Bewegung an einem Angriffspunkt 48 möglich, sodass eine einhändige Manipulation des Wicklungsdrahtes 24 möglich ist.

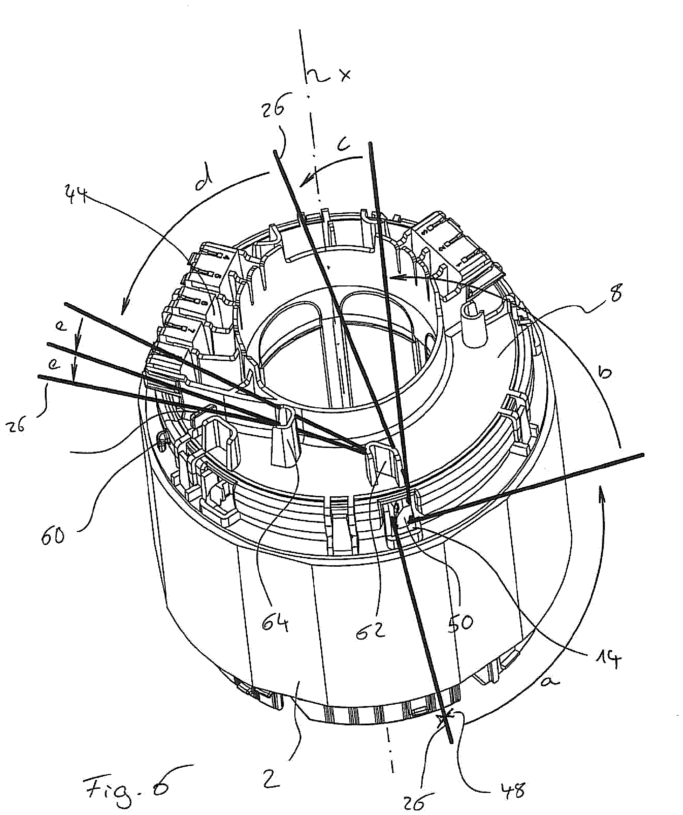

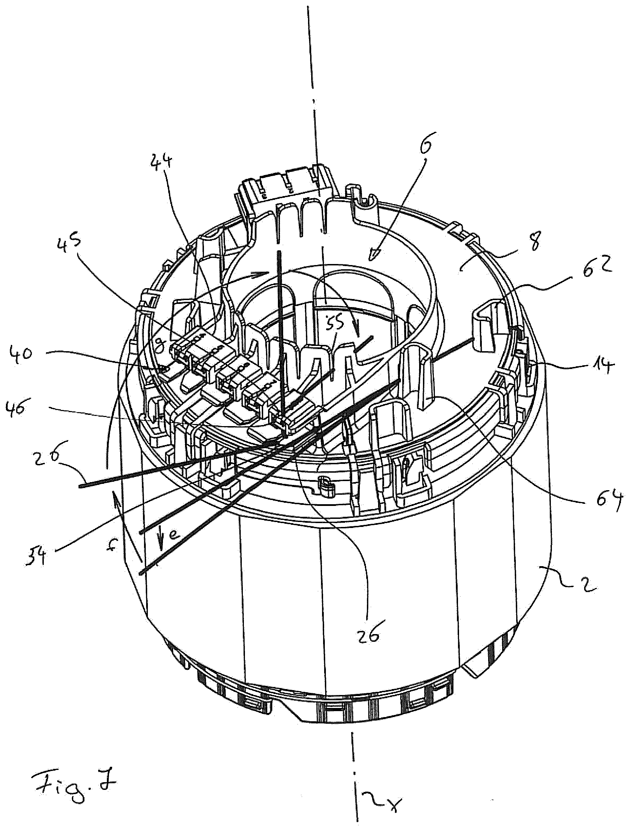

Anhand der Figuren 6 und 7 wird die Führung des Wicklungsdrahtes 26 beschrieben, welcher aus der Austrittsöffnung 14 zunächst radial nach außen tritt. Auch direkt an der Austrittsöffnung 14 ist ein Umlenkelement 50 an der Wicklungsschutzkappe 8 ausgebildet. Der Wicklungsdraht 26 wird an einem Angriffspunkt 48 ergriffen und dann in den Bewegungen a, b und c dreimal im Wesentlichen um 90° umgelenkt und um das Umlenkelement 50 geführt, wie es anhand von Fig. 3 für den Wicklungsdraht 22 beschrieben wurde. Nach der Bewegung c erstreckt sich der Wicklungsdraht damit im Wesentlichen radial nach innen. Im nächsten Schritt wird er dann in einer Bewegung d in einer Ebene quer zur Längsachse X um das Umlenkelement 62 in einem Winkel von etwa 45° umgelenkt. Das Umlenkelement 62 ist als gebogene bzw. gewinkelte Wandung ausgebildet, welche einstückig mit der Wicklungsschutzkappe 8 ausgebildet ist und sich von der axialen Stirnseite der Wicklungsschutzkappe 8 parallel zur Längsachse X wegerstreckt. Der Wicklungsdraht 26 wird dabei an einem nächsten Umlenkelement 64 vorbeigeführt, welches ebenfalls als Wandung ausgebildet ist, welches sich in axialer Richtung von der axialen Stirnseite der Wicklungsschutzkappe 8 wegerstreckt. In einer Bewegung e wird der Wicklungsdraht 26 dann in axialer Richtung auf die axiale Stirnseite der Wicklungsschutzkappe 8 zu verschwenkt, bis er sich im Wesentlichen parallel zur axialen Stirnseite der Wicklungsschutzkappe 8 in einer Ebene normal zur Längsachse X erstreckt. Mit der Bewegung f wird der Wicklungsdraht 26 dann in dieser Ebene in einem Winkel von im Wesentlichen 90° verschwenkt und dabei unter ein Führungselement 54 bewegt, welches sich zwischen dem zugehörigen Kontaktelement 46 und der axialen Stirnseite der Wicklungsschutzkappe 8 erstreckt. Das Führungselement 54 erstreckt sich, wie oben beschrieben, in radialer Richtung weiter nach außen als das Kontaktelement 46. In der Bewegung g wird der Wicklungsdraht 26 dann um das Führungselement 54 in eine Richtung parallel zur Längsachse X verschenkt und dann radial nach innen in den Schlitz 45 des Kontaktelementes 46 hineingezogen und im nächsten Schritt mit der Bewegung h um 90° radial nach innen verschwenkt und in einen der Schlitze 55 in der den Aufnahmeraum 6 umgebenden Wandung der Wicklungsschutzkappe 8 gezogen.

Auch für den Wicklungsdraht 26 ist zu erkennen, dass dieser dem Kontaktelement 46 von hinten, d. h. von einer Position, welche in einer Richtung quer zum Boden 44 des Kontaktelementes 46 hinter dem Boden 44, d. h. radial weiter innen gelegen ist, zugeführt wird. Anschließend wird der Wicklungsdraht 26 von der radialen Außenseite her in das Kontaktelement 46 bzw. dessen Schlitze 45 eingezogen. Auch hier wird der Wicklungsdraht 26 lediglich durch Manipulation an einem einzelnen Angriffspunkt 48 geführt. Dabei erfolgt allein eine ziehende Bewegung des Wicklungsdrahtes 26, was eine einhändige Montage ermöglicht.

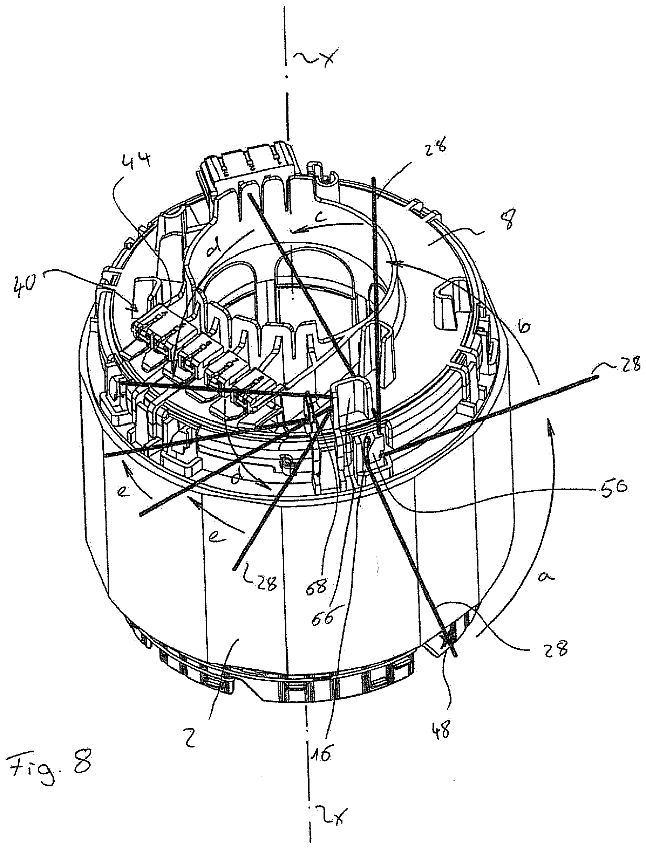

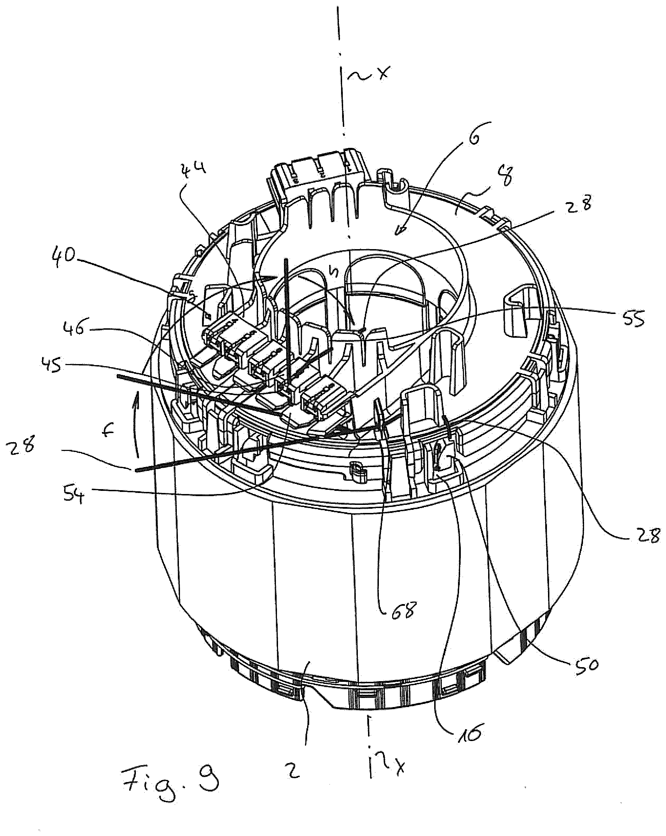

Anhand der Figuren 8 und 9 wird nun die Führung des Wicklungsdrahtes 28 beschrieben, welcher aus der Austrittsöffnung 16 austritt. Der Wicklungsdraht 28 wird, wie anhand der Wicklungsdrähte 22 und 26 beschrieben wurde, an einem Angriffspunkt 48 ergriffen und dann zunächst um ein direkt an der Austrittsöffnung 16 angeordnetes Umlenkelement 50 geführt. Dabei wird der Wicklungsdraht 28 wie anhand der Wicklungsdrähte 22 und 26 beschrieben, durch Bewegungen a, b und c um jeweils in etwa 90° so umgelenkt, dass er sich dann radial nach innen bzgl. der Längsachse X erstreckt. Im nächsten Schritt d wird der Wicklungsdraht 28 um ein Umlenkelement 66 geführt, welches sich wie die Umlenkelemente 62 und 64 in Form einer gekrümmten Wand in axialer Richtung von der axialen Stirnseite der Wicklungsschutzkappe 8 wegerstreckt und einstückig mit dieser aus Kunststoff ausgebildet ist. Dabei erfolgt eine Umlenkung in einer Ebene quer zur Längsachse X von etwa 150°. Anschließend wird der Wicklungsdraht 28 in der Bewegung e nach unten und zurück verschwenkt, sodass er hinter einem Haken 68 zu liegen kommt, wie in Fig. 9 gezeigt. Anschließend erfolgt eine Bewegung f in einer Ebene normal zur Längsachse X zwischen die axiale Stirnseite der Wicklungsschutzkappe 8 und ein Führungselement 54. Das Führungselement 54 erstreckt sich zwischen dem Kontaktelement 46 und der Wicklungsschutzkappe 8 quer zur Längsachse X und radial weiter nach außen als das Kontaktelement 46. Im nächsten Schritt wird durch die Bewegung g der Wicklungsdraht um 90° in die axiale Richtung X verschwenkt und dann radial nach innen in den Schlitz 45 des zugehörigen Kontaktelementes 46 gezogen und weiter durch die Bewegung h in einen Schlitz 55 in der den Aufnahmeraum 6 umgebenden Umfangswandung der Wicklungsschutzkappe 8 gezogen. Dort ist der Wicklungsdraht 28 dann zunächst fixiert.

Der Haken 68 dient dazu, die Wicklungsdrähte 26 und 28 voneinander zu trennen. Wie in Fig. 1 zu sehen ist, ist der Wicklungsdraht 26 über den Haken 68 geführt, während der Wicklungsdraht 28 unterhalb des Hakens 68 geführt ist.

In den Figuren 8 und 9 ist zu sehen, dass das Umlenkelement 66 ebenfalls in einer Richtung parallel zum Radius bezogen auf die Längsachse X gesehen hinter dem Boden 44, d. h. radial weiter innen gelegen ist, sodass der Wicklungsdraht 28 von einer Position, welche hinter dem Boden 44 der Kontaktelemente 46 gelegen ist, dem Kontaktelement 46 über das Führungselement 54 zugeführt wird und dann von vorne, d. h. von radial außen, in das Kontaktelement 46 bzw. dessen Schlitz 45 eingeführt wird. So ist auch der Wicklungsdraht 28 allein durch ziehende Manipulation an dem Angriffspunkt 48 einhändig manipulierbar und mit einem Kontaktelement 46 verbindbar.

Die Kontaktelemente 46 der zweiten Kontaktelementgruppe 40 sind so angeordnet, dass sie vollständig innerhalb des Außenumfanges des Statorkörpers 2 gelegen sind, sodass das Einführen in ein Statorgehäuse nicht behindert wird. Das gleiche gilt für die Anordnung der ersten Kontaktelementgruppe 38. Durch die Verwendung von Umlenkelementen 66, 68 und dem Führungselement 54
ist es möglich, einen gestreckten Draht den Kontaktelementen 46 von der Rückseite her, d. h. von einer rückseitig des Bodens 44 gelegenen Position, zuzuführen und allein durch ziehende Bewegung durch die Schlitze 45 einzuziehen.

Nachdem alle drei Wicklungsdrähte 26, 28 und 24 in die Schlitze 45 jeweils eines Kontaktelementes 46 der ersten Kontaktelementgruppe 40 geführt sind, werden metallische Elemente in die Kontaktelemente 46 bzw. deren Aufnahmeräume eingesetzt, um dort die Wicklungsdrähte 24, 26 und 28 zu fixieren sowie elektrisch zu kontaktieren. Die metallischen Elemente bilden gleichzeitig elektrische Kontakte einer Steckverbindung, welche von den Kontaktelementen 46 zur elektrischen Verbindung bzw. zum elektrischen Anschluss des Stotors gebildet wird. Die überstehenden Enden der Wicklungsdrähte 24, 26, 28 werden anschließend abgeschnitten.

### Bezugszeichenliste

- 2: Statorkörper
- 4: Wicklungsträger
- 6: Aufnahmeraum
- 8: Wicklungsschutzkappe
- 10, 12, 14, 16, 18, 20: Austrittsöffnungen
- 22, 24, 26, 28, 30, 32: Wicklungsdrähte
- 34: zweites axiales Ende
- 36: Verbindungsdrähte
- 38, 40: Kontaktelementgruppen
- 42: Kontaktelemente bzw. Aufnahmeräume
- 44: Boden
- 45: Schlitz
- 46: Kontaktelemente bzw. Aufnahmeräume
- 48: Angriffspunkt
- 50, 52: Umlenkelemente
- 54: Führungselement
- 55: Schlitz
- 56, 58, 60, 62, 64, 66: Umlenkelemente
- 68: Haken

- a, b, c, d, e, f, g, h: Bewegungen
- X: Längsachse

## Patentansprüche

1. Stator eines Elektromotors mit einem Statorkörper (2), zumindest einer in dem Statorkörper (2) angeordneten Statorwicklung und zumindest einem an einem ersten axialen Ende des Statorkörpers (2) angeordneten elektrischen Kontaktelement (42, 46), mit welchem ein Wicklungsdraht der Statorwicklung verbunden ist, wobei
der Wicklungsdraht (22, , 26, 28, 30, 32) ausgehend von seinem Austritt aus dem Statorkörper derart um zumindest ein Umlenkelement (50, 52, 56, 58, , 62, 64, 66) geführt ist, dass er sich von einer Position, welche in Richtung parallel zum Radius weiter innen als eine innere Seite des Kontaktelement (42, 46) liegt, zu einer äußeren Seite des elektrischen Kontaktelementes (42,46) erstreckt, wobei der Wicklungsdraht (22, , 26, 28, 30, 32) mit dem Kontaktelement (42, 46) von dessen radial äußeren Seite her verbunden ist, und
das zumindest eine Umlenkelement (50, 52, 56, 58, , 62, 64, 66) so angeordnet ist, dass es einen gestreckten Verlauf des Wicklungsdrahtes (22, , 26, 28, 30, 32) zwischen dem Umlenkelement (50, 52, 56, 58, , 62, 64, 66) und zumindest einem weiteren Umlenkpunkt und/oder dem elektrischen Kontaktelement (42, 46) ermöglicht, **dadurch gekennzeichnet, dass** auf das erste axiale Ende des Statorkörpers (2) eine Wicklungsschutzkappe (8) aufgesetzt ist, dass zumindest eine Austrittsöffnung (10, 12, 14, 16, 18, 20) vorhanden ist, durch welche der Wicklungsdraht (22, , 26, 28, 30, 32) aus dem Statorkörper (2) nach außen tritt und dass das zumindest eine Kontaktelement (42, 46) an einer axialen, dem Statorkörper abgewandten Stirnseite der Wicklungsschutzkappe (8) angeordnet ist.

2. Stator nach Anspruch 1, **dadurch gekennzeichnet, dass** das Kontaktelement (42, 46) einen Aufnahmeraum aufweist, in welchen der Wicklungsdraht (22, 24, 26, 28, 30, 32) der Statorwicklung geführt ist, wobei der Aufnahmeraum eine radial nach außen gerichtete Öffnung und einen gegenüber der Öffnung parallel zum Radius des Statorkörpers weiter innenliegenden Boden (44) aufweist, und der Wicklungsdraht (22, 24, 26, 28, 30, 32) ausgehend von seinem Austritt aus dem Statorkörper (2) derart um zumindest ein Umlenkelement (50, 52, 56, 58, 60, 62, 64, 66) geführt ist, dass er sich von einer Position, welche in Richtung parallel zum Radius weiter innen als der Boden (44) liegt, zu der Öffnung des elektrischen Kontaktelementes (42, 46) erstreckt.

3. Stator nach Anspruch 1 oder 2, **dadurch gekennzeichnet, dass** für zumindest einen Wicklungsdraht (22, 24, 26, 28, 30, 32) das Kontaktelement (42, 46), mit welchem der Wicklungsdraht verbunden ist und zumindest ein Umlenkelement (50, 52, 56, 58, 60, 62, 64, 66) derart angeordnet sind, dass zum Einführen des Wicklungsdrahtes (22, 24, 26, 28, 30, 32) in das Kontaktelement (42, 46) dieser von seinem Austritt aus dem Statorkörper (2) um das zumindest eine Umlenkelement (50, 52, 56, 58, 60, 62, 64, 66) und in das Kontaktelement (42, 46) hinein allein durch ziehende Bewegung des gestreckten Wicklungsdrahtes (22, 24, 26, 28, 30, 32) geführt werden kann.

4. Stator nach Anspruch 2 oder 3, **dadurch gekennzeichnet, dass** das Kontaktelement (42, 46) in zumindest einer Wandung seines Aufnahmeraum zumindest einen sich ausgehend von dessen Öffnung zu dem Boden (44) erstreckenden Schlitz (45) aufweist, in welchen der Wicklungsdraht (22, 24, 26, 28, 30, 32) eingeführt ist.

5. Stator nach einem der vorangehenden Ansprüche, **dadurch gekennzeichnet, dass** die Austrittsöffnung (10, 12, 14, 16, 18, 20) am Außenumfang der Wicklungsschutzkappe (8) gelegen und vorzugsweise radial nach außen gerichtet ist.

6. Stator nach einem der vorangehenden Ansprüche, **dadurch gekennzeichnet, dass** das zumindest eine Umlenkelement (50, 52, 56, 58, 60, 62, 64, 66) an der Wicklungsschutzkappe (8) angeordnet und vorzugsweise einstückig mit der Wicklungsschutzkappe (8) ausgebildet ist.

7. Stator nach einem der vorangehenden Ansprüche, **dadurch gekennzeichnet, dass** mehrere Kontaktelemente (42, 46) nebeneinander angeordnet sind und eine Kontaktelementgruppe (38, 40) bilden, wobei jeweils ein Wicklungsdraht (22, 24, 26, 28, 30, 32) einer Statorwicklung in eines der Kontaktelemente (42, 46) geführt ist.

8. Stator nach Anspruch 7, **dadurch gekennzeichnet, dass** eine erste Kontaktelementgruppe (38) vorhanden ist, deren Kontaktelemente (42) elektrisch leitend miteinander verbunden sind.

9. Stator nach Anspruch 7 oder 8, **dadurch gekennzeichnet, dass** eine zweite Kontaktelementgruppe (40) vorhanden ist, welche einen Steckverbinder zum elektrischen Anschluss des Stators bildet.

10. Stator nach einem der vorangehenden Ansprüche, **dadurch gekennzeichnet, dass** zumindest ein Umlenkelement (52, 56, 58, 62, 64, 66) vorhanden ist, welches sich in axialer Richtung (X) des Stators erstreckt.

11. Stator nach Anspruch 10, **dadurch gekennzeichnet, dass** zumindest zwei Umlenkelemente (52, 56, 58, 62, 64, 66) vorhanden sind, welche sich in axialer Richtung (X) erstrecken und unterschiedliche axiale Längen aufweisen, wobei vorzugsweise um ein erstes kürzeres Umlenkelement ein erster Wicklungsdraht und um ein zweites längeres Umlenkelement ein zweiter Wicklungsdraht geführt ist.

12. Stator nach einem der vorangehenden Ansprüche, **dadurch gekennzeichnet, dass** das Umlenkelement (52, 56, 58, 62, 64, 66) als Stift oder als ein- oder mehrfach gekrümmte und/oder gewinkelte Wandung ausgebildet ist.

13. Stator nach einem der vorangehenden Ansprüche, **dadurch gekennzeichnet, dass** der Wicklungsdraht (22, 24, 26, 28, 30, 32) in radialer Richtung aus dem Statorkörper (2) austritt und in Richtung seiner weiteren Erstreckung über ein oder mehrere Umlenkelemente (50) zuerst in umfänglicher, anschließend in axialer Richtung (X) und nachfolgend radial nach innen umgelenkt ist.

14. Stator nach einem der vorangehenden Ansprüche, **dadurch gekennzeichnet, dass** an dem zumindest einen Kontaktelement (42, 46) zumindest ein sich radial nach außen erstreckendes Führungselement (54) angeordnet ist, welches sich über die Öffnung des Kontaktelementes (42, 46) hinaus in radialer Richtung erstreckt und um welches herum der Wicklungsdraht (22, 24, 26, 28, 30, 32) zu dem Kontaktelement (42, 46) geführt ist.

## Claims

1. A stator of an electric motor with a stator body (2), at least one stator winding arranged in the stator body (2), and at least one electrical contact element (42, 46) which is arranged at a first axial end of the stator body (2) and to which a winding wire of the stator winding is connected, wherein
the winding wire (22, 26, 28, 30, 32) departing from its exit out of the stator body, is led around at least one deflection element (50, 52, 56, 58, 62, 64, 66) in a manner such that it extends from a position which in a direction parallel to the radius lies further inwards than an inner side of the contact element (42, 46), to an outer side of the electric contact element (42, 46), wherein the winding wire (22, 26, 28, 30, 32) is connected to the contact element (42, 46) from its radially outward side, and the at least one deflection element (50, 52, 56, 58, 62, 64, 66) is arranged such that it permits a stretched course of the winding wire (22, 26, 28, 30, 32) between the deflection element (50, 52, 56, 58, 62, 64, 66) and at least one further deflection point and/or the electrical contact element (42, 46), **characterised in that** a winding protection cap (8) is applied onto the first axial end of the stator body (2), and that at least one exit opening (10, 12, 14, 16, 18, 20) is present, through which opening the winding wire (22, 26, 28, 30, 32) exits outwards out of the stator body (2) and that the at least one contact element (42, 46) is arranged on an axial face side of the winding protection cap (8) which is away from the stator body

2. A stator according to claim 1, **characterised in that** the contact element (42, 46) comprises a receiving space, into which the winding wire (22, 24, 26, 28, 30, 32) of the stator winding is led, wherein the receiving space comprises a radially outwardly directed opening and a base (44) which lies further inwards parallel to the radius of the stator body compared to the opening, and the winding wire (22, 24, 26, 28, 30, 32) departing from its exit out of the stator body (2) is led around at least one deflection element (50, 52, 56, 58, 60, 62, 64, 66) in a manner such that it extends from a position which in a direction parallel to the radius lies further inwards than the base (44), to the opening of the electrical contact element (42, 46).

3. A stator according to claim 1 or 2, **characterised in that** for at least one winding wire (22, 24, 26, 28, 30, 32), the contact element (42, 46), to which the winding wire is connected and at least one deflection element (50, 52, 56, 58, 60, 62, 64, 66) are arranged in a manner such that for introducing the winding wire (22, 24, 26, 28, 30, 32) into the contact element (42, 46), this wire can be led from its exit out of the stator body (2) around the at least one deflection element (50, 52, 56, 58, 60, 62, 64, 66) and into the contact element (42, 46) alone by way of a pulling movement of the stretched winding wire (22, 24, 26, 28, 30, 32).

4. A stator according to claim 2 or 3, **characterised in that** the contact element (42, 46) in at least one wall of its receiving space comprises at least one slot (45) which departing from the opening of the contact element extends to the base (44), into which the winding wire (22, 24, 26, 28, 30, 32) is introduced.

5. A stator according to one of the preceding claims, **characterised in that** the exit opening (10, 12, 14, 16, 18, 20) is situated on the outer periphery of the winding protection cap (8) and is preferably directed radially outwards.

6. A stator according to one of the preceding claims, **characterised in that** the at least one deflection element (50, 52, 56, 58, 60, 62, 64, 66) is arranged on the winding protection cap (8) and is preferably designed as one piece with the winding protection cap (8).

7. A stator according to one of the preceding claims, **characterised in that** several contact elements (42, 46) are arranged next to one another and form a contact element group (38, 40), wherein in each case a winding wire (22, 24, 26, 28, 30, 32) of a stator winding is led into one of the contact elements (42, 46).

8. A stator according to claim 7, **characterised in that** a first contact element group (38) is present, whose contact elements (42) are electrically conductively connected to one another.

9. A stator according to claim 7 or 8, **characterised in that** a second contact element group (40) is present which connects a plug-in connector for the electrical connection of the stator.

10. A stator according to one of the preceding claims, **characterised in that** at least one deflection element (52, 56, 58, 62, 64, 66) is present, which extends in the axial direction (X) of the stator.

11. A stator according to claim 10, **characterised in that** at least two deflection elements (52, 56, 58, 62, 64, 66) are present, which extend in the axial direction (X) and have different axial lengths, wherein preferably a first winding wire is led round a first shorter deflection element and a second winding wire is led around a second longer deflection element.

12. A stator according to one of the preceding claims, **characterised in that** the deflection element (52, 56, 58, 62, 64, 66) is designed as a pin or a wall which is curved and/or angled, once or several times.

13. A stator according to one of the preceding claims, **characterised in that** the winding wire (22, 24, 26, 28, 30, 32) exits out of the stator body (2) in the radial direction, and in the direction of its further extension is deflected via one or more deflection elements (50) firstly in a peripheral direction, subsequently in the axial direction (X) and subsequently radially inwards.

14. A stator according to one of the preceding claims, **characterised in that** at least one radially outwardly extending guide element (54) which extends in the radial direction beyond the opening of the contact element (42, 46) and around which the winding wire (22, 24, 26, 28, 30, 32) is led to the contact element (42, 46), is arranged on the least one contact element (42, 46).

## Revendications

1. Stator d'un moteur électrique avec un corps de stator (2), au moins un enroulement de stator disposé dans le corps de stator (2) et au moins un élément de contact électrique (42, 46) disposé à une première extrémité axiale du corps de stator (2) auquel un fil d'enroulement de l'enroulement de stator est relié,
le fil d'enroulement (22, 26, 28, 30, 32) étant mené, à partie de sa sortie du corps de stator, autour d'un élément de renvoi (50, 52, 56, 58, 62, 64, 66) de façon telle qu'il s'étende d'une position située, en direction parallèle au rayon, davantage à l'intérieur qu'une face intérieure de l'élément de contact électrique (42, 46), à une face extérieure de l'élément de contact électrique (42, 46), le fil d'enroulement (22, 26, 28, 30, 32) étant relié à l'élément de contact (42, 46) à partir de la face radialement extérieure de celui-ci, et ledit au moins un élément de renvoi (50, 52, 56, 58, 62, 64, 66) étant disposé de façon telle qu'il rende possible une étendue droite du fil d'enroulement (22, 26, 28, 30, 32) entre l'élément de renvoi (50, 52, 56, 58, 62, 64, 66) et au moins un autre point de renvoi et/ou l'élément de contact électrique (42, 46),
**caractérisé en ce qu'**un capuchon de protection d'enroulement (8) est posé sur la première extrémité axiale du corps de stator (2), **en ce qu'**il y a au moins une ouverture de sortie (10, 12, 14, 16, 18, 20) par laquelle le fil d'enroulement (22, 26, 28, 30, 32) sort du corps de stator (2) vers l'extérieur et **en ce que** ledit au moins un élément de contact (42, 46) est disposé sur une face frontale axiale du capuchon de protection d'enroulement (8) opposée au corps de stator.

2. Stator selon la revendication 1, **caractérisé en ce que** l'élément de contact (42, 46) comprend un espace de réception dans lequel le fil d'enroulement (22, 24, 26, 28, 30, 32) de l'enroulement de stator est mené, l'espace de réception comprenant une ouverture orientée radialement vers l'extérieur et un fond (44) disposé, par rapport à l'ouverture, parallèlement au rayon du corps de stator davantage vers l'intérieur, et **en ce que** le fil d'enroulement (22, 24, 26, 28, 30, 32) est mené, à partir de sa sortie du corps de stator (2), de façon telle autour d'au moins un élément de renvoi (50, 52, 56, 58, 60, 62, 64, 66) qu'il s'étende, à partir d'une position qui, en direction parallèle au rayon, est située davantage à l'intérieur que le fond (44), à l'ouverture de l'élément de contact électrique (42, 46).

3. Stator selon la revendication 1 ou 2, **caractérisé en ce que**, pour au moins un fil d'enroulement (22, 24, 26, 28, 30, 32), l'élément de contact (42, 46) auquel le fil d'enroulement est relié et au moins un élément de renvoi (50, 52, 56, 58, 60, 62, 64, 66) sont disposés de façon telle que, pour introduire le fil d'enroulement (22, 24, 26, 28, 30, 32) dans l'élément de contact (42, 46), celui-ci puisse être mené, à partir de sa sortie du corps de stator (2), autour ledit au moins un élément de renvoi (50, 52, 56, 58, 60, 62, 64, 66) et dans l'élément de contact (42, 46) uniquement par un mouvement de traction du fil d'enroulement (22, 24, 26, 28, 30, 32) droit.

4. Stator selon la revendication 2 ou 3, **caractérisé en ce que** l'élément de contact (42, 46) comprend dans au moins une paroi de son espace de réception, au moins une fente (45) s'étendant à partir de l'ouverture de celui-ci jusqu'au fond (44), dans laquelle le fil d'enroulement (22, 24, 26, 28, 30, 32) est introduit.

5. Stator selon l'une des revendications précédentes, **caractérisé en ce que** l'ouverture de sortie (10, 12, 14, 16, 18, 20) est située sur le pourtour extérieur du capuchon de protection d'enroulement (8) et est orientée de préférence radialement vers l'extérieur.

6. Stator selon l'une des revendications précédentes, **caractérisé en ce que** ledit au moins un élément de renvoi (50, 52, 56, 58, 60, 62, 64, 66) est disposé sur le capuchon de protection d'enroulement (8) et est formé de préférence en une seule pièce avec le capuchon de protection d'enroulement (8).

7. Stator selon l'une des revendications précédentes, **caractérisé en ce que** plusieurs éléments de contact (42, 46) sont disposés les uns à côté des autres et forment un groupe d'éléments de contact (38, 40), un fil d'enroulement (22, 24, 26, 28, 30, 32) respectif étant introduit dans l'un des éléments de contact (42, 46).

8. Stator selon la revendication 7, **caractérisé en ce qu'**il y a un premier groupe d'éléments de contact (38) dont les éléments de contact (42) sont reliés électriquement les uns aux autres.

9. Stator selon la revendication 7 ou 8, **caractérisé en ce qu'**il y a un deuxième groupe d'éléments de contact (40) qui constitue un connecteur à enfichage pour le raccordement électrique du stator.

10. Stator selon l'une des revendications précédentes, **caractérisé en ce qu'**il y a au moins un élément de renvoi (52, 56, 58, 62, 64, 66) qui s'étend en direction axiale (X) du stator.

11. Stator selon la revendication 10, **caractérisé en ce qu'**il y a au moins deux éléments de renvoi (52, 56, 58, 62, 64, 66) qui s'étendent en direction axiale (X) et présentent des longueurs axiales différentes, un premier fil d'enroulement étant mené de préférence autour d'un premier élément de renvoi plus court et un deuxième fil d'enroulement étant mené autour d'un deuxième élément de renvoi plus long.

12. Stator selon l'une des revendications précédentes, **caractérisé en ce que** l'élément de renvoi (52, 56, 58, 62, 64, 66) est configuré comme une tige ou comme une paroi cintrée une ou plusieurs fois et/ou coudée.

13. Stator selon l'une des revendications précédentes, **caractérisé en ce que** le fil d'enroulement (22, 24, 26, 28, 30, 32) sort du corps de stator (2) en direction radiale et est ensuite renvoyé, au fil de son étendue, sur un ou plusieurs éléments de renvoi, d'abord en direction circonférentielle et puis en direction axiale (X) et ensuite radialement vers l'intérieur.

14. Stator selon l'une des revendications précédentes, **caractérisé en ce qu'**il est disposé sur ledit au moins un élément de contact (42, 46), au moins un élément de guidage (54) s'étendant radialement vers l'extérieur qui s'étend en direction radiale au-delà de l'ouverture de l'élément de contact (42, 46) et autour duquel le fil d'enroulement (22, 24, 26, 28, 30, 32) est mené vers l'élément de contact (42, 46).
